# EUROPEAN PATENT APPLICATION

(11) **EP 4 807 677 A1**
(43) Date of publication of application: **16.09.2026**
(21) Application number: 24900858.2
(22) Date of filing: 30.10.2024
(51) Int. Cl.: G06T 7/593, H04N 13/239, H04N 13/271, G06T 3/40, G06T 1/20

(54) **METHOD AND DEVICE FOR PROCESSING IMAGE**

(30) Priority: 05.12.2023 KR 20230174927; 30.04.2024 KR 20240058133
(71) Applicant: Samsung Electronics Co., Ltd., Suwon-si, Gyeonggi-do 16677 (KR)
(72) Inventor: YEO, Yoonjae, Suwon-si, Gyeonggi-do 16677 (KR); JEONG, Jaeyun, Suwon-si, Gyeonggi-do 16677 (KR); JI, Seowon, Suwon-si, Gyeonggi-do 16677 (KR)
(74) Representative: Appleyard Lees IP LLP
(86) International application number: PCT/KR2024/016826
(87) International publication number: WO 2025/121671

(57) **Abstract**

Provided are a method and an electronic device for processing an image. This operation method of the electronic device may include the steps of: acquiring a left eye image by capturing an object using a first camera and acquiring a right eye image by capturing the object using a second camera; adjusting resolutions with respect to a first direction of the left eye image and the right eye image on the basis of calculation performance information of a processor of the electronic device; and acquiring depth information from the resolution-adjusted left eye image and the resolution-adjusted right eye image.

## Description

### Technical Field

The present disclosure relates to a method and device for processing an image. More specifically, the present disclosure provides a method and device for adjusting a resolution of an image to obtain depth information or a three-dimensional (3D) image from a stereo image.

### Background Art

Recently, devices with a depth sensor that obtains depth information representing a spatial sense of an object included in a real space composed of a 3D stereoscopic space are widely used to provide users with a sense of immersion.

Augmented reality is a technology that overlays virtual images onto the physical environment space or real world objects of the real world. Augmented reality devices (e.g., smart glasses) that utilize the augmented reality technology are being used in everyday life for purposes such as information search, route guidance, and camera photographing. In particular, smart glasses can be worn as fashion items and used for both indoor and outdoor activities.

Autonomous driving applications, robotic applications, and augmented reality applications executed on augmented reality devices mostly require constant depth information. As the size or resolution of an image that serves as the basis for obtaining depth information increases, the complexity of a process for obtaining depth information increases, and the load applied to the devices may increase. In order to reduce the load or the complexity of the process for obtaining the depth information, an input image from which depth information is obtained may be adjusted to a low resolution.

Depth information obtained from a low-resolution image is lower in at least one of definition or resolution than that obtained from a high-resolution image, and therefore, the depth information may require post processing for improving the definition or resolution. For example, by using a high-resolution image as additional information through a method such as super resolution, the resolution of depth information may be improved. However, in the case in which depth information is estimated at a low definition, improvement to a high definition may be difficult.

### Disclosure of Invention

### Solution to Problem

An aspect of the present disclosure may provide an electronic device for processing an image. The electronic device according to an embodiment of the present disclosure may include: cameras including a first camera and a second camera; memory storing a program or at least one instruction; and at least one processor. The at least one processor may be configured to execute the program or the at least one instruction stored in the memory to cause the electronic device to obtain a left-eye image by photographing an object using the first camera, obtain a right-eye image by photographing the object using the second camera, adjust resolutions of the left-eye image and the right-eye image with respect to a first direction based on computational performance information of the processor of the electronic device, and obtain depth information from the left-eye image of which the resolution has been adjusted and the right-eye image of which the resolution has been adjusted.

Another aspect of the present disclosure may provide a method of processing an image in an electronic device. The method of processing the image according to an embodiment of the present disclosure may include obtaining a left-eye image by photographing an object using a first camera and obtaining a right-eye image by photographing the object using a second camera, adjusting resolutions of the left-eye image and the right-eye image with respect to a first direction based on computational performance information of a processor of the electronic device, and obtaining depth information from the left-eye image of which the resolution has been adjusted and the right-eye image of which the resolution has been adjusted.

Another aspect of the present disclosure may provide a computer-readable recording medium storing a program for executing the method on a computer.

### Brief Description of Drawings

The present disclosure may be easily understood by combining the following detailed description with the accompanying drawings, and reference numerals represent structural elements.
FIG. 1 is a diagram illustrating processing an image in an electronic device according to an embodiment of the present disclosure.
FIG. 2 is a diagram illustrating changing a resolution in an electronic device according to an embodiment of the present disclosure.
FIG. 3 is a diagram illustrating changing a resolution in an electronic device according to an embodiment of the present disclosure.
FIG. 4 is a diagram illustrating changing a resolution in an electronic device according to an embodiment of the present disclosure.
FIG. 5 is a diagram illustrating changing a resolution in an electronic device according to an embodiment of the present disclosure.
FIG. 6 is a diagram illustrating changing a resolution in an electronic device according to an embodiment of the present disclosure.
FIG. 7 is a diagram illustrating changing a resolution in an electronic device according to an embodiment of the present disclosure.
FIG. 8 is a flowchart illustrating a method of processing an image, according to an embodiment of the present disclosure.
FIG. 9 is a block diagram illustrating components of an electronic device according to an embodiment of the present disclosure.

### Mode for the Invention

Although general terms being currently widely used were selected as terminology used in embodiments of the present disclosure while considering the functions of the present disclosure, they may vary according to intentions of one of ordinary skill in the art, judicial precedents, the advent of new technologies, and the like.

Terms arbitrarily selected by the applicant may also be used in a specific case. In this case, their meanings will be described in detail in the detailed description of the corresponding embodiments. Hence, the terms used in the present disclosure must be defined based on the meanings of the terms and the entire contents of the present disclosure, not by simply stating the terms themselves.

In the entire specification, it will be understood that when a certain part "includes" a certain component, the part does not exclude another component but can further include another component, unless the context clearly dictates otherwise.

It should be understood that combinations of blocks in each flowchart and flowcharts can be performed by one or more computer programs including computer executable instructions. The one or more computer programs may be stored in single memory or distributed and stored in a plurality of pieces of different memory.

All functions or operations described in the present document may be processed by a single processor or a combination of processors. The single processor or the combination of processors may include circuitry for processing, such as Application Processor (AP), Communication Processor (CP), Graphical Processing Unit (GPU), Neural Processing Unit (NPU), Microprocessor Unit (MPU), System on Chip (SoC), or Integrated Chip (IC).

In addition, the terms "portion", "part", "module", etc. used in this specification refer to a unit for processing at least one function or operation, which is implemented as hardware, software, or a combination of hardware and software. In the present disclosure, the "module" means a unit that processes a function or operation performed by a processor and may be embodied as software, such as instructions, an algorithm, a data structure, or a program code.

As used here, the phrase "configured (or set) to" may be interchangeably used with the phrases "suitable for," "having the capacity to," "designed to," "adapted to," "made to," or "capable of" depending on the circumstances.

The phrase "configured (or set) to" does not essentially mean "specifically designed in hardware to." Rather, in some circumstances, the phrase "system configured to" may mean that the system can perform an operation together with another device or parts.

For example, the phrase "processor configured (or set) to perform A, B, and C" may include a dedicated processor (for example, an embedded processor) for performing the corresponding operations, or a generic-purpose processor (for example, CPU or application processor) that causes a device to perform the corresponding operations by executing one or more program codes, instructions or software stored in memory.

The singular forms "a," "an," and "the" may include plural referents unless the context clearly dictates otherwise. All terms used herein, including technical or scientific terms, may have the same meaning as commonly understood by one of ordinary skill in the technical art written in the present specification.

In the present disclosure, functions related to Artificial Intelligence (AI) may operate through a processor and memory. The processor may be configured with one or more processors. In this case, the one or more processors may be a general-purpose processor, such as Central Processing Unit (CPU), Application Processor (AP), and Digital Signal Processor (DSP), a graphics-dedicated processor, such as Graphics processing Unit (GPU) and Vision Processing Unit (VPU), or an AI-dedicated processor such as Neural Processing Unit (NPU).

The one or more processors may control processing of input data according to a pre-defined operation rule or AI model stored in the memory. Also, when the one or more processors are AI-dedicated processors, the AI-dedicated processors may be designed with a hardware structure specialized for processing a specific AI model.

The pre-defined operation rule or AI model may be generated through training. Herein, being generated through training means that a pre-defined operation rule or AI model configured to perform a desired characteristic (or purpose) is generated by training a basic AI model with multiple pieces of training data according to a learning algorithm. The training may be performed by a device of performing AI according to the present disclosure or through a separate server and/or system.

Examples of the learning algorithm may include supervised learning, unsupervised learning, semi-supervised learning, or reinforcement learning, although not limited thereto.

In the present disclosure, the 'AI model' may be configured with a plurality of neural network layers. Each of the plurality of neural network layers may have a plurality of weight values, and perform neural network computation through computation of a computation result of a previous layer and the plurality of weight values.

A plurality of weight values of the plurality of neural network layers may be optimized by a training result of the AI model. For example, the plurality of weight values may be updated such that loss values or cost values obtained from the AI model during a training process are reduced or minimized.

The AI model may include Deep Neural Network (DNN), and for example, the AI model may include, but is not limited to, Convolutional Neural Network (CNN), Recurrent Neural Network (RNN), Restricted Boltzmann Machine (RBM), Deep Belief Network (DBN), Bidirectional Recurrent Deep Neural Network (BRDNN), transformer, attention, or Deep Q-Networks.

Also, in the present disclosure, it will be understood that when a component is "connected" or "coupled" to another component, the component may be directly connected or coupled to the other component, but may alternatively be connected or coupled to the other component with an intervening component therebetween, unless specified otherwise.

An electronic device according to the present disclosure may be implemented as various electronic devices, such as a laptop computer, a desktop, an e-book reader, a digital broadcasting terminal, a Personal Digital Assistants (PDA), a Portable Multimedia Player (PMP), a navigation, an MPEG layer 3 (MP3) player, a camcorder, an Internet Protocol Television (IPTV), a Digital Television (DTV), a television (TV), a set-top box, a smart monitor, a tablet PC, a laptop, a digital signage, a large display, a 360-degree projector, a Mobile Station (MS), a vehicle, a satellite, an airborne, a cellular phone, a smart phone, a wearable device, etc.

In an embodiment of the present disclosure, the electronic device may be an augmented reality (AR) device. The 'augmented reality device' may be a device capable of expressing augmented reality and may be implemented as, for example, Augmented Reality Glasses in the shape of glasses that a user wears on his/her face. However, the augmented reality device is not limited thereto and the augmented reality device may be implemented as a Head-Mounted Display (HMD) apparatus worn on a user's head, an Augmented Reality Helmet, etc.

Augmented Reality is a technology that overlays a virtual object on a physical environment space or a real world object of a real world, and has an advantage of providing a virtual object and virtual information merged with a real space. The augmented reality device (for example, smart glasses) that utilizes the augmented reality technology may be useful in everyday life, such as for information search, route guidance, and camera photographing. In particular, the augmented reality device may be worn as fashion items and used for both indoor and outdoor activities.

A camera according to the present disclosure may photograph an object in a real space to obtain an image of the object. The camera may include a lens module, an image sensor, and an image processing module.

The camera may obtain a still image or a moving image obtained by the image sensor (e.g., complementary metal-oxide semiconductor (CMOS) or charged coupled device (CCD)). The image processing module may process the still image or moving image obtained through the image sensor, extract necessary information, transfer the extracted information to a processor, and store the information in memory.

The electronic device may obtain depth information about a real-world object through an image photographed by the camera. The depth information may include a depth map, a disparity map, etc., but these are only examples and the depth information is not limited to the above-mentioned examples.

A disparity map may include information about a disparity, i.e. a distance between pixels that match with each other in left and right-eye images. The disparity map may include an image representing a horizontal displacement between a pixel and its corresponding pixel in pixel units.

The depth map may be an image including a depth value that indicates how far away an object expressed by a pixel of the image is from a camera. The depth map may include a plurality of pixels having depth values, and each of the plurality of pixels may have a depth value or a distance value that is equal or similar to a depth of a real object.

A definition refers to ability to identify different depth values. A definition may be expressed in a bitrate, an error range for a preset depth value, or an identification unit of a depth value.

The higher the definition, the more quantized values may be represented between preset depth values. For example, in a case where depth values are identified in units of 10 mm, a definition may be greater than in a case where depth values are identified in units of 100 mm.

A resolution may be represented by a size of an image or the number of pixels included in an image. For example, a resolution may be expressed by (the number of width pixels x the number of height pixels) or (the number of horizontal pixels x the number of vertical pixels). However, this is only an example and the present disclosure is not limited to the above-mentioned examples.

Hereinafter, for convenience of description, the present disclosure may describe an image processing method as an example. However, this is only an example and the present disclosure may also be applied to other graphic content such as videos or games. For example, an electronic device according to the present disclosure may be applied to adjust a resolution of a video or other graphic content.

In the accompanying drawings, some components may be exaggeratedly shown, omitted, or schematically shown. Also, a size of each component does not fully reflect its actual size. Additionally, numbers (for example, first, second, etc.) used in the description of the specification may be merely identifiers to distinguish one component from another.

Hereinafter, an embodiment of the present disclosure will be described in detail with reference to the accompanying drawings so that the present disclosure may be readily implemented by one of ordinary skill in the technical field to which the present disclosure pertains. However, the present disclosure may be implemented in various different forms and is not limited to the embodiment described herein.

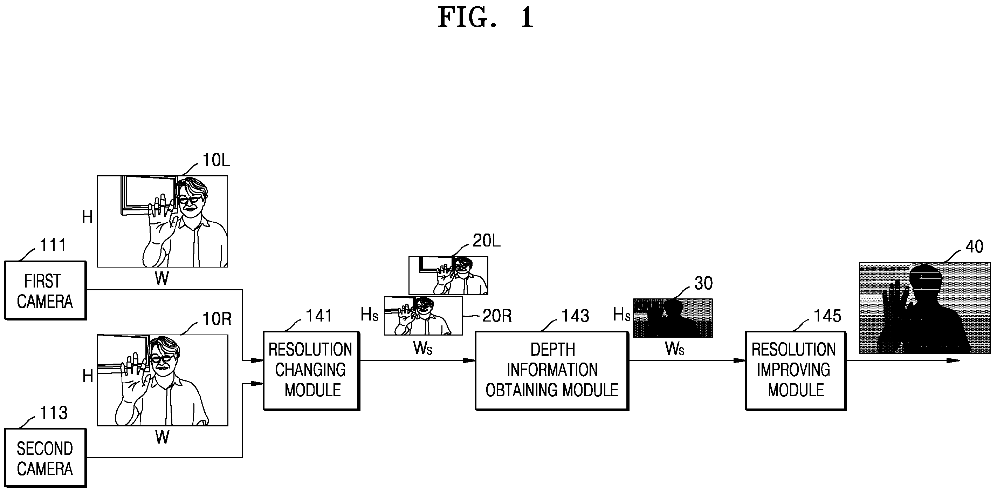

FIG. 1 is a diagram illustrating processing an image in an electronic device according to an embodiment of the present disclosure.

Referring to FIG. 1, an electronic device 100 may include a first camera 111 and a second camera 113. The first camera 111 and the second camera 113 may be configured as stereo cameras.

The first camera 111 and the second camera 113 may refer to binocular cameras, for example, a left-eye camera and a right-eye camera. However, this is only an example, and the first camera 111 and the second camera 113 may represent cameras positioned or arranged in the electronic device 100 in various directions, such as up and down, left and right, and diagonally.

The electronic device 100 may obtain stereo images 10L and 10R by photographing an object using the first camera 111 and the second camera 113. The stereo images 10L and 10R may include binocular images, for example, a left-eye image 10L of an object photographed by the first camera 111 and a right-eye image 10R of the object photographed by the second camera 113.

Although FIG. 1 illustrates the electronic device 100 with two cameras including the first camera 111 and the second camera 113, the present disclosure is not limited thereto. In an embodiment of the present disclosure, the electronic device 100 may include no camera, include a single camera, or include multi cameras of three or more.

In the embodiment shown in FIG. 1, the electronic device 100 is shown as obtaining the left-eye image 10L and the right-eye image 10R by using the first camera 111 and the second camera 113, However, the present disclosure is not limited thereto.

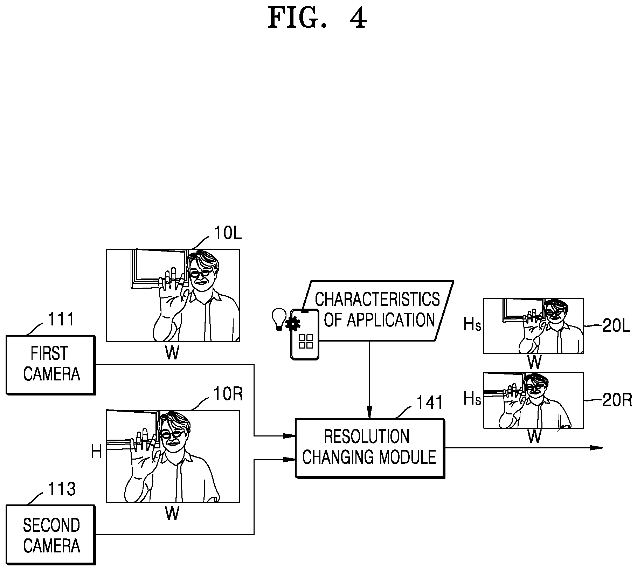

The electronic device 100 may receive stereo images 10L and 10R photographed by another camera, instead of a camera 110 (see FIG. 4) of the electronic device 100, from another electronic device. However, this is only an example and the electronic device 100 may obtain stereo images 10L and 10R through another method.

In an embodiment of the present disclosure, the left-eye image 10L and the right-eye image 10R may have been obtained in advance and stored in an image storage 147. The electronic device 100 may obtain the left-eye image 10L and the right-eye image 10R from the image storage 147.

Hereinafter, a resolution changing module 141, a depth information obtaining module 143, and a resolution improving module 145 may represent software modules configured with instructions or program codes for processing functions and/or operations of the electronic device 100.

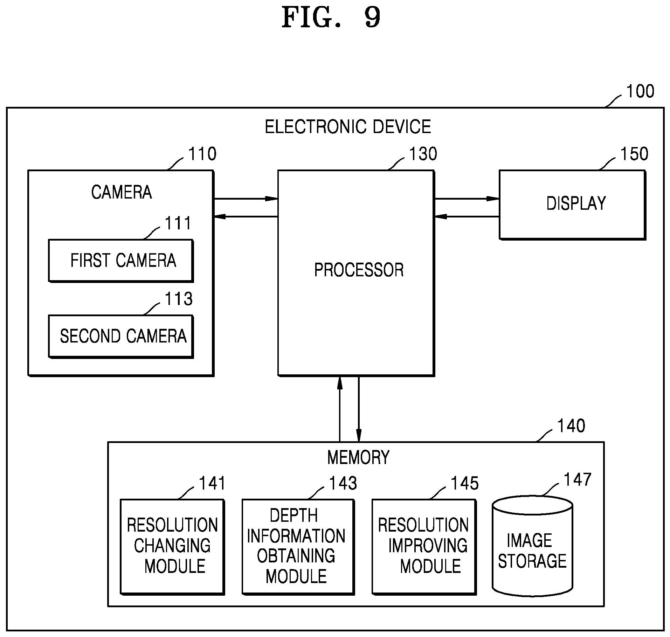

Functions and/or operations of the resolution changing module 141, the depth information obtaining module 143, and the resolution improving module 145 may be performed when a processor 130 (see FIG. 9) of the electronic device 100 executes software such as the instructions or program codes of the modules.

The resolution changing module 141 may obtain stereo images 20L and 20R by adjusting resolutions of the stereo images 10L and 10R. The stereo images 20L and 20R of which the resolutions have been adjusted may include binocular images, for example, a left-eye image 20L of which a resolution has been adjusted and a right-eye image 20R of which a resolution has been adjusted.

The resolution changing module 141 may be included in the electronic device 100. The resolution changing module 141 may receive the left-eye image 10L from the first camera 111 and the right-eye image 10R from the second camera 113 and may adjust the resolutions of the left-eye image 10L and the right-eye image 10R. The resolution changing module 141 may transfer the stereo images 20L and 20R of which the resolutions have been adjusted to the depth information obtaining module 143 or another device including the depth information obtaining module 143.

A resolution may include at least one of a horizontal resolution or a vertical resolution. In the present disclosure, horizontal may refer to a case that is parallel or identical to a base line between the first camera 111 and the second camera 113, and vertical may refer to a case that is perpendicular to a straight line connecting the first camera 111 and the second camera 113.

The resolution changing module 141 may adjust resolutions of the left-eye image 10L and the right-eye image 10R with respect to a first direction based on computational performance information of the processor 130 of the electronic device 100. The resolutions with respect to the first direction may refer to a vertical resolution. For example, the resolution changing module 141 may change the resolutions of the left-eye image 10L and the right-eye image 10R with respect to the first direction from H to Hₛ. In an embodiment of the present disclosure, resolutions of the left-eye image 10L and the right-eye image 10R with respect to a second direction may be maintained.

The processor 130 may include at least one of a Central Processing Unit (CPU), a Graphics Processing Unit (GPU), a Tensor Processing Unit (TPU), a Neural Processing Unit (NPU), an Application Processor (AP), a Digital Signal Processor (DSP), a Vision Processing Unit (VPU), a Microprocessor Unit (MPU), a System on Chip (SoC), an Integrated Chip (IC), or an AI Accelerator. However, these are only examples and the present disclosure is not limited to the above-mentioned examples. The processor 130 may be used to obtain depth information.

For convenience of description, any processor such as AP may be described as an example. However, this is only an example and the present disclosure may also be applied in the same manner to a case of including another processor.

The computational performance information of the processor 130 may be described as an example of any processor information such as Floating-point Operations Per Second (FLOPS), for convenience of description. However, this is only an example and the present disclosure may also be applied in the same manner to another processor information.

The computational performance information of the processor may be identified based on at least one of computational performance, the number of cores, cache capacity, Million Instructions Per Second (MIPS), FLOPS, Instructions Per Cycle (IPC), Cycles Per Instruction (CPI), a thread count, an instruction set, clock speed, a benchmark score or benchmark result, power consumption while the processor operates, energy efficiency, Performance Per Watt, Thermal Design Power (TDP), active efficiency, idle efficiency, a processor architecture, a memory bandwidth, processor generation, a memory type and capacity, computational precision, a unit of a processor manufacturing process, a manufacturer, a model, a purpose, or a cache hit rate. However, these are only examples and the computational performance information of the processor is not limited thereto.

The resolution changing module 141 may obtain processor information through a user input or obtain processor information preset or stored in the electronic device 100. The resolution changing module 141 may determine to adjust a resolution H with respect to the first direction to Hₛ based on the obtained processor information. The resolution changing module 141 may obtain the left-eye image 20L and the right-eye image 20R of which resolutions H with respect to the first direction have been adjusted to Hₛ.

For example, when the resolution changing module 141 receives computational performance (1600 FLOPS) of the processor as an input, the resolution changing module 141 may identify at least one of a vertical size Hₛ=H*k(k≤1) or a vertical size adjustment ratio k that does not exceed the computational performance. The resolution changing module 141 may obtain the left-eye image 20L and the right-eye image 20R of which the resolutions have been adjusted to the identified vertical size Hₛ.

The resolution changing module 141 may identify a power state of the electronic device 100. The resolution changing module 141 may adjust the resolutions of the left-eye image 10L and the right-eye image 10R based on the power state. The power state may represent information about at least one of a power consumption amount of the electronic device 100, a consumption power amount of the electronic device 100, a remaining battery level of the electronic device 100, whether the electronic device 100 is being charged, or whether power consumption needs to be reduced. In an embodiment of the present disclosure, the resolutions of the left-eye image 10L and the right-eye image 10R with respect to the second direction may be maintained.

For example, when a remaining battery level of the electronic device 100 is below a threshold level, when the electronic device 100 is not being charged, when a power consumption amount of the processor 130 is larger than a threshold value, or when a consumption power amount of the electronic device 100 needs to be reduced, the resolution changing module 141 may obtain a left-eye image 20L and a right-eye image 20R of which resolutions have been adjusted to the vertical size Hₛ=H*k (k≤1).

The resolution changing module 141 may adjust the resolutions of the left-eye image 10L and the right-eye image 10R with respect to the second direction based on a required definition for depth information. The resolutions with respect to the second direction may refer to a horizontal resolution. For example, the resolution changing module 141 may change the resolutions of the left-eye image 10L and the right-eye image 10R with respect to the second direction from W to Wₛ.

A required definition for depth information may refer to a required degree to identify different depth values. The required definition may be represented by a bitrate, an error range for a preset depth value, or an identification unit of a depth value.

The required definition for depth information may include at least one of a reference depth required by a system, a definition for the reference depth required by the system, a reference depth required by a user, or a definition for the reference depth required by the user.

For example, in a case where a required definition is represented by a reference depth x (mm) required by a system or application and a definition y (mm) for the reference depth, a pixel px corresponding to a position of the depth x (mm) and a pixel px+y corresponding to a position of a depth x+y (mm) may represent different depth values in a depth map.

The resolution changing module 141 may obtain a required definition for depth information through a user input or may obtain a required definition for depth information preset or stored in the electronic device 100. The resolution changing module 141 may determine to adjust a resolution W with respect to the second direction to Wₛ based on the required definition. The resolution changing module 141 may obtain a left-eye image 20L and a right-eye image 20R of which resolutions have been adjusted to the identified resolution Wₛ with respect to the second direction.

For example, in a case where a horizontal size adjustment ratio of an image is r, a reference depth is x (mm), a definition required for the reference depth is y (mm), a focal length is f (pixel), and a distance between the first camera 111 and the second camera 113 is b (mm), disparity dₓ (pixel) at x mm and disparity d_{x+y} (pixel) at x+y mm may be identified based on [Equation 1] and [Equation 2]

${d}_{x} = \frac{f ∗ r ∗ b}{x}$

${d}_{x + y} = \frac{f ∗ r ∗ b}{x + y}$

When the definition y mm for the reference depth x mm needs to be distinguished, the horizontal size adjustment ratio r may be identified based on [Equation 3].

$\frac{f ∗ r ∗ b}{x + y} = \frac{f ∗ r ∗ b}{x} \to r = min \left(1,\frac{x}{f ∗ b}∗\left(\frac{x}{y}+1\right)\right)$

The resolution changing module 141 may obtain a left-eye image 20L and a right-eye image 20R of which resolutions have been adjusted by changing a horizontal size W of a stereo image to Wₛ=W*r (r≤1) according to the horizontal size adjustment ratio r.

In an embodiment of the present disclosure, the resolution changing module 141 may receive, as an input, at least one of a horizontal size adjustment ratio r, a horizontal size Wₛ, or an image of which a horizontal resolution has changed.

When the resolution changing module 141 receives, as an input, at least one of the horizontal size adjustment ratio r, the horizontal size Wₛ, or the image of which the horizontal resolution has changed, the resolution changing module 141 may identify a vertical resolution to be adjusted by using processor information. The resolution changing module 141 may change a vertical resolution of the image to the identified vertical resolution.

The resolution changing module 141 may identify a vertical size according to an input based on a data structure in which at least one of processor information, a horizontal size Wₛ, or a vertical size Hₛ is mapped. The resolution changing module 141 may obtain a left-eye image 20L and a right-eye image 20R of which resolutions have been adjusted to the identified vertical size.

For example, as shown in [Table 1], processor information such as a table in which computational performance of processors, horizontal sizes, and vertical sizes are mapped may be set or stored in the electronic device 100. When the resolution changing module 141 receives computational performance (1600 FLOPS) of a processor and a horizontal size W as inputs, the resolution changing module 141 may identify a vertical size H/4 that satisfies the horizontal size or larger and the computational performance.

**[Table 1] [092]**

| Processor | AP 1 | | | AP 2 | | | ... | AP *N* | | |
|---|---|---|---|---|---|---|---|---|---|---|
| FLOPS | 1800 | | | 1600 | | | | 200 | | |
| Horizontal Size | W | W/2 | ... | W | W/2 | ... | ... | W | W/2 | ... |
| Vertical Size | H/2 | H | ... | H/4 | H/2 | ... | | H/18 | H/9 | ... |

For convenience of description, a look-up table LUT is provided as an example. However, the look-up table is only an example, and the resolution changing module 141 may identify a vertical size according to processor information by using an array, a Hash Table, a tree structure, a map, a dictionary, an index, a deep learning method, etc.

The resolution changing module 141 may obtain stereo images 20L or 20R of which resolutions have been changed by changing vertical sizes H of stereo images to Hₛ=H*k (k≤1).

The resolution changing module 141 may identify an application being executed by the electronic device 100. The resolution changing module 141 may adjust the resolutions of the left-eye image 10L and the right-eye image 10R according to characteristics of the application being executed.

The resolution changing module 141 may identify information about a depth information obtaining time corresponding to the characteristics of the application being executed. The characteristics of the application may indicate at least one of importance of real-time or fast processing operations, a computation speed required by the application, urgency, a definition required by the application, or whether object tracking is required.

The resolution changing module 141 may adjust the resolutions of the left-eye image 10L and the right-eye image 10R based on the corresponding depth information obtaining time. The information about the depth information obtaining time may include at least one of a depth information obtaining time required by the application, a driving speed required by the application, whether the depth information obtaining time needs to be reduced, or whether the application requires a shorter depth information obtaining time than a threshold value. The driving speed may be associated with a depth map obtaining time, and the shorter the depth map obtaining time, the higher the driving speed.

To obtain the required depth information obtaining time or shorter, the resolution changing module 141 may obtain stereo images 20L and 20R of which resolutions have been adjusted by changing vertical sizes H of stereo images to Hₛ=H*k (k≤1). In an embodiment of the present disclosure, the resolutions of the left-eye image 10L and the right-eye image 10R with the second direction may be maintained.

The resolution changing module 141 may identify a driving speed required by the identified application. The resolution changing module 141 may adjust the resolutions of the left-eye image 10L and the right-eye image 10R based on the identified driving speed.

When the driving speed required by the application being executed is higher than a preset threshold value, when the driving speed required by the application being executed needs to be higher than a driving speed required by another application previously executed, or when a time taken for the application being executed to obtain depth information needs to be below a threshold time or needs to be reduced, the resolution changing module 141 may obtain stereo images 20L and 20R of which resolutions have been adjusted by changing vertical sizes H of stereo images to Hₛ=H*k (k≤1). In an embodiment of the present disclosure, the resolutions of the left-eye image 10L and the right-eye image 10R with respect to the second direction may be maintained.

When a time taken for the application being executed to obtain depth information needs to be reduced, the resolution changing module 141 may obtain stereo images 20L and 20R of which resolutions have been adjusted by changing vertical sizes H of the stereo images 10L and 10R to Hₛ=H*k (k≤1). In an embodiment of the present disclosure, the resolutions of the left-eye image 10L and the right-eye image 10R with respect to the second direction may be maintained.

For example, when a person video application is executed, when an application that requires object tracking is executed, when a transportation application that provides position information or traffic information or an autonomous driving application is executed, when a communication application or game application that allows real-time interaction with another user is executed, when a medical application such as medical image generation is executed, or when a security application that detects and analyzes motion in a specific area is executed, the resolution changing module 141 may obtain stereo images 20L and 20R of which resolutions have been adjusted by changing the vertical sizes H of the stereo images 10L and 10R to Hₛ=H*k (k ≤ 1). In an embodiment of the present disclosure, the resolutions of the left-eye image 10L and the right-eye image 10R with respect to the second direction may be maintained.

The resolution changing module 141 may identify a change of an application of the electronic device 100. The resolution changing module 141 may obtain stereo images 20L and 20R of which resolutions have been adjusted based on the change of the application.

When execution of an application capable of operating offline or an application not requiring real-time operations changes to execution of another application requiring real-time operations or another application having relative importance of real-time operations, the resolution changing module 141 may acquire stereo images 20L and 20R of which vertical resolutions have been adjusted. In an embodiment of the present disclosure, the resolutions of the left-eye image 10L and the right-eye image 10R with respect to the second direction may be maintained.

When execution of a spatial video application changes to execution of a person video application, the resolution changing module 141 may obtain stereo images 20L and 20R of which resolutions have been adjusted by changing the vertical sizes H of the stereo images 10L and 10R to Hₛ=H*k (k ≤ 1). In an embodiment of the present disclosure, the resolutions of the left-eye image 10L and the right-eye image 10R with respect to the second direction may be maintained.

The stereo images 20L and 20R of which resolutions have been adjusted may be used to obtain depth information or a 3D image.

The resolution changing module 141 may identify a use state of the processor 130. The resolution changing module 141 may adjust the resolutions of the left-eye image and the right-eye image based on the computational performance information of the processor 130 and information regarding the use state of the processor 130.

The resolution changing module 141 may obtain stereo images 20L and 20R of which resolutions have been adjusted by considering the computational performance information of the processor 130 and the use state of the processor such as an application use state of the electronic device 100.

For example, when computational performance of the processor available for acquiring depth information is below a threshold level due to background execution or concurrent execution of another application, or when computational performance allocable to acquiring depth information is below the threshold level, the resolution changing module 141 may obtain stereo images 20L and 20R of which vertical resolutions have been adjusted.

As a resolution that serves as a basis for acquiring depth information increases, complexity of a depth information obtaining process may increase and a load applied to the electronic device 100 may increase. Also, when a horizontal resolution is reduced, depth information may be estimated at a low definition. In a case where depth information is estimated at a low definition, improvement to a high resolution may be difficult.

The electronic device 100 according to an embodiment may reduce deterioration of a horizontal resolution by adaptively changing a vertical resolution and a horizontal resolution. Accordingly, the electronic device 100 according to an embodiment of the present disclosure may provide a technical effect of estimating depth information at a high speed while reducing loss of a definition.

In addition, the electronic device 100 according to an embodiment of the present disclosure may adaptively adjust complexity of a depth information obtaining process and a load applied to the electronic device 100 by considering performance of the processor, a use state of the processor, and a type or characteristics of an application being executed.

An embodiment of the present disclosure may reduce adaptation and development of a depth information estimation model according to performance of the processor and enable adaptation and development of a single solution.

The depth information obtaining module 143 may obtain depth information 30 from the stereo images 20L and 20R of which the resolutions have been adjusted. The depth information 30 may include a depth map, a disparity map, etc. However, these are only examples and the depth information 30 is not limited to the above-mentioned examples.

The depth information obtaining module 143 may estimate the depth information by using entire information of an image through global matching. The depth information obtaining module 143 may estimate the depth information by using a method, such as, for example, Belief propagation, Dynamic programming, Semi-global matching, and Graph-cut.

The depth information obtaining module 143 may estimate the depth information by using partial information of an image through local matching. The depth information obtaining module 143 may estimate the depth information through at least one of feature-based local matching or region-based local matching. The depth information obtaining module 143 may estimate the depth information by using a method, such as, for example, Sum of Absolute Difference (SAD), Sum of Squared Difference (SSD), Normalized Cross Correlation (NCC), and Census transform.

The depth information obtaining module 143 may obtain the depth information by using an AI model trained to receive stereo images 10 and 20 as inputs and output depth information. The AI model may further include at least one of Iterative Geometry Encoding Volume-Stereo (IGEV-Stereo), Cascaded Recurrent Network with Adaptive Correlation (CREStereo), Attention Concatenation Volume (ACVNet), or Geometry and Context Network (CG-Net).

The stereo images 20L and 20R of which the resolutions have been adjusted may be used for the depth information obtaining module 143 to obtain depth information. In the present disclosure, for convenience of description, the depth information obtaining module 143 may be described as being included in the same electronic device 100 as the resolution changing module 141. However, this is only an example, and the depth information obtaining module 143 may be included in another electronic device 200 (not shown) that is different from the electronic device 100 including the resolution changing module 141.

For example, in a case where the resolution changing module 141 is included in the electronic device 100 and the depth information obtaining module 143 is included in the other electronic device 200 (not shown), the depth information obtaining module 143 may receive stereo images 20L and 20R of which resolutions have been adjusted from the electronic device 100 and obtain the depth information 30 based on the stereo images 20L and 20R of which the resolutions have been adjusted.

The resolution improving module 145 may obtain depth information 40 with an improved resolution by increasing a resolution of the depth information 30. The resolution improving module 145 may use a super resolution model to obtain the depth information 40 with the improved resolution from the depth information 30.

The resolution improving module 145 may obtain the depth information 40 with the improved resolution from the depth information 30 by estimating values between pixels through a super resolution model using an interpolation method such as bicubic interpolation.

The super resolution model may include an AI model trained to receive the depth information 30 as an input and output the depth information 40 with the improved resolution. The AI model may include at least one of Super-Resolution Convolutional Neural Network (SRCNN), Efficient Sub-Pixel Convolutional Neural Network (ESPCN), Very Deep Super-Resolution (VDSR), Super-Resolution Generative Adversarial Network (SRGAN), Fast Super-Resolution Convolutional Neural Network (FSRCNN), or Laplacian Pyramid Super-Resolution Network (LapSRN).

For example, the resolution improving module 145 may obtain the depth information 40 with the improved resolution by changing a vertical size H of the depth information 30 to Ht=H*a (a≥1) and changing a horizontal size W of the depth information 30 to Wt=W*b(b≥1).

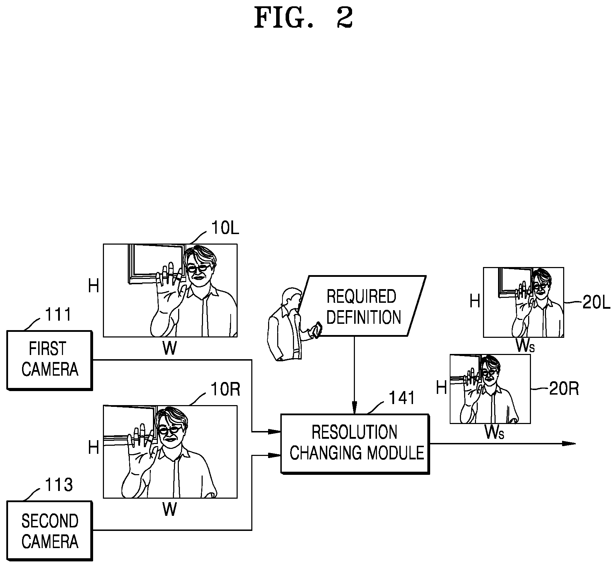

FIG. 2 is a diagram illustrating changing a resolution in an electronic device according to an embodiment of the present disclosure.

The electronic device 100 according to the present disclosure may include the resolution changing module 141. The resolution changing module 141 may include a unit that processes a function of changing a resolution or an operation of changing a resolution, performed by the processor 130, and may be implemented as software, such as instructions, an algorithm, a data structure, or a program code, and executed by the processor 130.

The resolution changing module 141 may obtain stereo images 20L and 20R of which resolutions have been adjusted from stereo images 10L and 10R.

The resolution changing module 141 may receive a left-eye image 10L from the first camera 111, receive a right-eye image 10R from the second camera 113, and adjust resolutions of the left-eye image 10L and the right-eye image 10R. The resolution changing module 141 may transfer the stereo images 20L and 20R of which the resolutions have been adjusted to the depth information obtaining module or a device including the depth information obtaining module.

A resolution may include at least one of a horizonal resolution or a vertical resolution. In the present disclosure, horizontal may refer to a case that is parallel or identical to a base line connecting the first camera 111 and the second camera 113, and vertical may refer to a case that is perpendicular to a straight line connecting the first camera 111 and the second camera 113.

The resolution changing module 141 may adjust the resolutions of the left-eye image 10L and the right-eye image 10R with respect to the second direction based on a required definition for depth information. The resolutions with respect to the second direction may include a horizontal resolution. For example, the resolution changing module 141 may change the resolutions of the left-eye image 10L and the right-eye image 10R with respect to the second direction from W to Wₛ.

A required definition for depth information may refer to a required degree to identify different depth values. The required definition may be represented by a bitrate, an error range for a preset depth value, or an identification unit of a depth value.

The required definition for depth information may include at least one of a reference depth required by a system, a definition for the reference depth required by the system, a reference depth required by a user, or a definition for the reference depth required by the user.

For example, in a case where a required definition is represented by a reference depth x (mm) required by a system or application and a definition y (mm) for the reference depth, a pixel px corresponding to a position of the depth x (mm) and a pixel px+y corresponding to a position of a depth x+y (mm) may represent different depth values in a depth map.

The resolution changing module 141 may obtain a required definition for depth information through a user input or may obtain a required definition for depth information preset or stored in the electronic device 100. The resolution changing module 141 may determine to adjust a resolution W with respect to the second direction to Wₛ based on the required definition. The resolution changing module 141 may obtain a left-eye image 20L and a right-eye image 20R of which resolutions have been adjusted to the identified resolution Wₛ with respect to the second direction.

For example, in a case where a horizontal size adjustment ratio of an image is r, a reference depth is x mm, a definition required for the reference depth is y mm, a focal length is f (pixel), and a distance between the first camera 111 and the second camera 113 is b mm, disparity dₓ (pixel) at x mm and disparity d_{x+y} (pixel) at x+y mm may be identified based on [Equation 1] and [Equation 2].

${d}_{x} = \frac{f ∗ r ∗ b}{x}$

${d}_{x + y} = \frac{f ∗ r ∗ b}{x + y}$

When the definition y mm for the reference depth x mm needs to be distinguished, the horizontal size adjustment ratio r may be identified based on [Equation 3].

$\frac{f ∗ r ∗ b}{x + y} + 1 = \frac{f ∗ r ∗ b}{x} \to r = min \left(1,\frac{x}{f ∗ b}∗\left(\frac{x}{y}+1\right)\right)$

The resolution changing module 141 may obtain a left-eye image 20L and a right-eye image 20R of which resolutions have been adjusted by changing a horizontal size W of a stereo image to Wₛ=W*r (r≤1) according to the horizontal size adjustment ratio r.

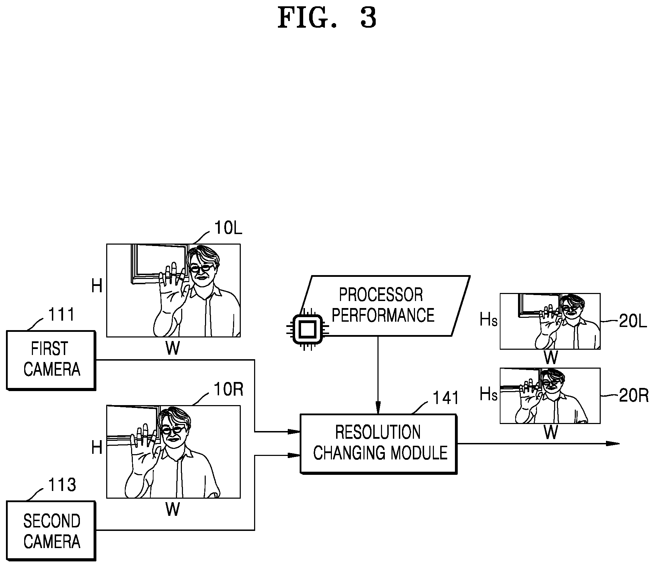

FIG. 3 is a diagram illustrating changing a resolution in an electronic device according to an embodiment of the present disclosure.

The resolution changing module 141 may obtain stereo images 20L and 20R of which resolutions have been adjusted from stereo images 10L and 10R. The stereo images 20L and 20R of which the resolutions have been adjusted may include binocular images, for example, a left-eye image 20L of which a resolution has been adjusted and a right-eye image 20R of which a resolution has been adjusted.

The resolution changing module 141 may be included in the electronic device 100. The resolution changing module 141 may receive the left-eye image 10L from the first camera 111 and the right-eye image 10R from the second camera 113 and may adjust the resolutions of the left-eye image 10L and the right-eye image 10R. The resolution changing module 141 may transfer the stereo images 20L and 20R of which the resolutions have been adjusted to the depth information obtaining module or another device including the depth information obtaining module.

The resolutions may include at least one of a horizontal resolution or a vertical resolution. In the present disclosure, horizontal may refer to a case that is parallel or identical to a base line between the first camera 111 and the second camera 113, and vertical may refer to a case that is perpendicular to a straight line connecting the first camera 111 and the second camera 113.

The resolution changing module 141 may adjust resolutions of the left-eye image 10L and the right-eye image 10R with respect to a first direction based on computational performance information of the processor 130 of the electronic device 100. The resolutions with respect to the first direction may include a vertical resolution. For example, the resolution changing module 141 may change the resolutions of the left-eye image 10L and the right-eye image 10R with respect to the first direction from H to Hₛ. In an embodiment of the present disclosure, resolutions of the left-eye image 10L and the right-eye image 10R with respect to the second direction may be maintained.

The processor 130 may include at least one of a CPU, a GPU, a TPU, a NPU, an AP, a DSP, a VPU, a MPU, a SoC, an IC, or an AI Accelerator. However, these are only examples and the present disclosure is not limited to the above-mentioned examples. The processor 130 may be used to obtain depth information.

For convenience of description, any processor such as AP may be described as an example. However, this is only an example and the present disclosure may also be applied in the same manner to a case of including another processor.

The computational performance information of the processor 130 may be described as an example of any processor information such as FLOPS, for convenience of description. However, this is only an example and the present disclosure may also be applied in the same manner to another processor information.

The computational performance information of the processor may be identified based on at least one of computational performance, the number of cores, cache capacity, MIPS, FLOPS, IPC, CPI, a thread count, an instruction set, clock speed, a benchmark score or benchmark result, power consumption while the processor operates, energy efficiency, Performance Per Watt, TDP, active efficiency, idle efficiency, a processor architecture, a memory bandwidth, processor generation, a memory type and capacity, computational precision, a unit of a processor manufacturing process, a manufacturer, a model, a purpose, or a cache hit rate. However, these are only examples and the computational performance information of the processor is not limited thereto.

The resolution changing module 141 may obtain processor information through a user input or obtain processor information preset or stored in the electronic device 100. The resolution changing module 141 may determine to adjust a resolution H with respect to the first direction to Hₛ based on the obtained processor information. The resolution changing module 141 may obtain a left-eye image 20L and a right-eye image 20R of which resolutions H with respect to the first direction have been adjusted to Hₛ.

For example, when the resolution changing module 141 receives computational performance (1600 FLOPS) of the processor as an input, the resolution changing module 141 may identify at least one of a vertical size Hₛ=H*k(k≤1) or a vertical size adjustment ratio k that does not exceed the computational performance. The resolution changing module 141 may obtain a left-eye image 20L and a right-eye image 20R of which resolutions have been adjusted to the identified vertical size Hₛ.

The resolution changing module 141 may identify a power state of the electronic device 100. The resolution changing module 141 may adjust resolutions of the left-eye image 10L and the right-eye image 10R based on the power state.

For example, when a remaining battery level of the electronic device 100 is below a threshold level, when the electronic device 100 is not being charged, when a power consumption amount of the processor 130 is equal to or larger than a threshold value, or when a consumption power amount of the electronic device 100 needs to be reduced, the resolution changing module 141 may obtain a left-eye image 20L and a right-eye image 20R of which resolutions have been adjusted to the vertical size Hₛ=H*k (k≤1).

FIG. 4 is a diagram illustrating changing a resolution in an electronic device according to an embodiment of the present disclosure.

The resolution changing module 141 may obtain stereo images 20L and 20R of which resolutions have been changed from stereo images 10L and 10R. The stereo images 20L and 20R of which the resolutions have been adjusted may include binocular images, for example, a left-eye image 20L of which a resolution has been adjusted and a right-eye image 20R of which a resolution has been adjusted.

The resolution changing module 141 may be included in the electronic device 100. The resolution changing module 141 may receive the left-eye image 10L from the first camera 111 and the right-eye image 10R from the second camera 113 and may adjust the resolutions of the left-eye image 10L and the right-eye image 10R.

The resolutions may include at least one of a horizontal resolution or a vertical resolution. In the present disclosure, horizontal may refer to a case that is parallel or identical to a base line between the first camera 111 and the second camera 113, and vertical may refer to a case that is perpendicular to a straight line connecting the first camera 111 and the second camera 113.

The resolution changing module 141 may identify an application being executed by the electronic device 100. The resolution changing module 141 may adjust the resolutions of the left-eye image 10L and the right-eye image 10R according to characteristics of the application being executed. The resolution changing module 141 may transfer the stereo images 20L and 20R of which the resolutions have been adjusted to the depth information obtaining module or another device including the depth information obtaining module.

The characteristics of the application may indicate at least one of importance of real-time or fast processing operations, urgency, a resolution required by the application, or whether object tracking is required.

The resolution changing module 141 may identify information about a depth information obtaining time corresponding to the characteristics of the application being executed. The resolution changing module 141 may adjust the resolutions of the left-eye image 10L and the right-eye image 10R based on the corresponding depth information obtaining time.

The information about the depth information obtaining time may include at least one of a depth information obtaining time required by the application, a driving speed required by the application, whether the depth information obtaining time needs to be below a threshold time, or whether the depth information obtaining time needs to be reduced. The driving speed may be associated with a depth map obtaining time, and the shorter the depth map obtaining time, the higher the driving speed.

To obtain the required depth information obtaining time or shorter, the resolution changing module 141 may obtain stereo images 20L and 20R of which resolutions have been adjusted by changing vertical sizes H of stereo images to Hₛ=H*k (k≤1). In an embodiment of the present disclosure, resolutions of the left-eye image 10L and the right-eye image 10R with respect to the second direction may be maintained.

The resolution changing module 141 may identify a driving speed required by the identified application. The resolution changing module 141 may adjust resolutions of the left-eye image 10L and the right-eye image 10R based on the identified driving speed.

When the driving speed required by the application being executed is equal to or higher than a preset threshold value or when the driving speed required by the application being executed needs to be higher than a driving speed required by another application previously executed, the resolution changing module 141 may obtain stereo images 20L and 20R of which resolutions have been adjusted by changing vertical sizes H of stereo images to Hₛ=H*k (k≤1). In an embodiment of the present disclosure, the resolutions of the left-eye image 10L and the right-eye image 10R with respect to the second direction may be maintained.

When a time taken for the application being executed to obtain depth information needs to be reduced, the resolution changing module 141 may obtain stereo images 20L and 20R of which resolutions have been adjusted by changing vertical sizes H of the stereo images 10L and 10R to Hₛ=H*k (k≤1). In an embodiment of the present disclosure, the resolutions of the left-eye image 10L and the right-eye image 10R with respect to the second direction may be maintained.

For example, when a person video application is executed, when an application that requires object tracking is executed, when a transportation application that provides position information or traffic information or an autonomous driving application is executed, when a communication application or game application that allows real-time interaction with another user is executed, when a medical application such as medical image generation is executed, or when a security application that detects and analyzes motion in a specific area is executed, the resolution changing module 141 may obtain stereo images 20L and 20R of which resolutions have been adjusted by changing the vertical sizes H of the stereo images 10L and 10R to Hₛ=H*k (k ≤ 1).

The resolution changing module 141 may identify a change of an application of the electronic device 100. The resolution changing module 141 may obtain stereo images 20L and 20R of which resolutions have been adjusted based on the change of the application.

When execution of an application capable of operating offline or an application not requiring real-time operations changes to execution of another application requiring real-time operations or another application having relative importance of real-time operations, the resolution change module 141 may obtain stereo images 20L and 20R of which vertical resolutions have been adjusted. In an embodiment of the present disclosure, the resolutions of the left-eye image 10L and the right-eye image 10R with respect to the second direction may be maintained.

When execution of a spatial video application changes to execution of a person video application, the resolution changing module 141 may obtain stereo images 20L and 20R of which resolutions have been adjusted by changing vertical sizes H of stereo images 10L and 10R to Hₛ=H*k (k ≤ 1).

The stereo images 20L and 20R of which the resolutions have been adjusted may be used to obtain depth information or a 3D image.

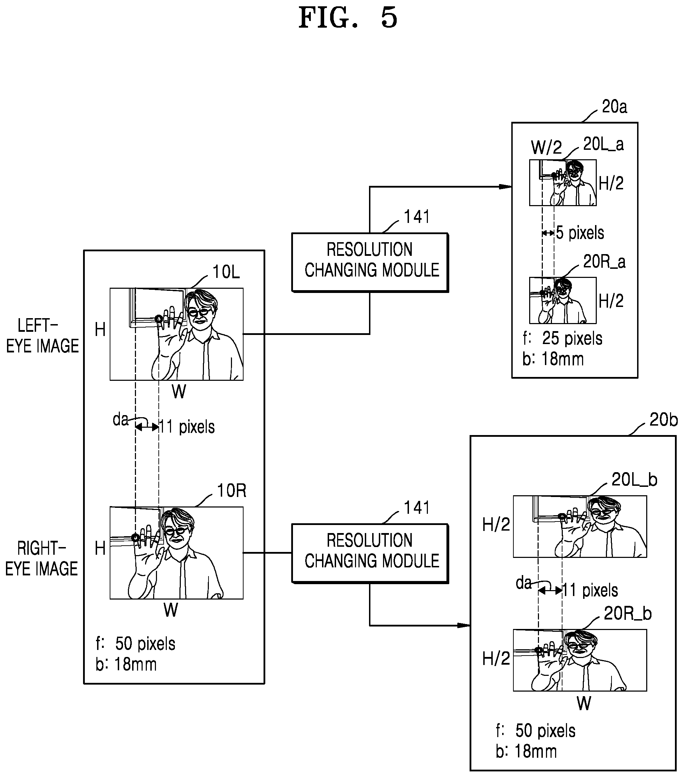

FIG. 5 is a diagram illustrating changing a resolution in an electronic device according to an embodiment of the present disclosure.

The electronic device 100 may obtain depth information 30 (see FIG. 1) based on stereo images 10L and 10R. The electronic device 100, for example, the resolution changing module 141 may reduce complexity of a depth information obtaining process and a load applied to the electronic device 100 by changing the stereo images 10L and 10R to stereo images 20a and 20b adjusted to low resolutions. The depth information may include a depth map, a disparity map, etc. However, these are only examples and the depth information is not limited to the above-mentioned examples.

A disparity map may include information about a disparity, that is, a distance between pixels that match with each other in left and right-eye images. The disparity map may include an image representing a horizontal displacement between a pixel and its corresponding pixel in pixel units.

The depth map may be an image including a depth value that indicates how far away an object expressed by a pixel of the image is from a camera. The depth map may include a plurality of pixels having depth values and each of the plurality of pixels may have a depth value or a distance value that is equal or similar to a depth of a real object.

Referring to FIG. 5, the resolution changing module 141 may obtain a stereo image 20a adjusted to a low resolution, such as a horizontal resolution Wₛ=W/2 and a vertical resolution Hₛ=H/2. The stereo image 20a adjusted to the low resolution may include a left-eye image 20L_a and a right-eye image 20R_a of which resolutions have been adjusted.

The resolution changing module 141 may obtain a stereo image 20b adjusted to a low resolution, such as a horizontal resolution Wₛ=W and a vertical resolution Hₛ=H/2. The stereo image 20b adjusted to the low resolution may include a left-eye image 20L_b and a right-eye image 20R_b of which resolutions have been adjusted.

In regard with the stereo images 10L and 10R, when a focal length f is 50 pixels, a base line b between binocular cameras is 18 mm, disparity dₚ₁ for a pixel p1 is 11 pixels, and disparity dₚ₂ (not shown) for a pixel p2 is 10 pixels, a depth value D may be obtained based on [Equation 4].

$D = \frac{f ⋅ b}{d}$

In a case of estimating a depth value Dₚ₁ for the pixel p1 from the image 20a adjusted to the low resolution, depth information such as ${D}_{p 1} = \frac{25 ∗ 18}{5} = 90$ *mm* may be obtained. In a case of estimating a depth value Dₚ₂ for the pixel p2 from the image 20a adjusted to the low resolution, depth information such as ${D}_{p 2} = \frac{25 ∗ 18}{5} = 90$ *mm* may be obtained.

In a case of estimating a depth value Dₚ₁ for the pixel p1 from the image 20b adjusted to the low resolution, depth information such as ${D}_{p 1} = \frac{50 ∗ 18}{11} = 81.8$ *mm* may be obtained. In a case of estimating a depth value Dₚ₂ for the pixel p2 from the image 20b adjusted to the low resolution, depth information such as ${D}_{p 2} = \frac{25 ∗ 18}{5} = 90$ *mm* may be obtained.

When depth information is obtained from the image 20a adjusted to a relatively lower horizontal resolution than the image 20b adjusted to the low resolution, a definition of the depth information obtained from the image 20a adjusted to the low resolution may be lower than a definition of depth information obtained from the image 20b adjusted to the low resolution.

The electronic device according to an embodiment of the present disclosure may reduce deterioration of a horizontal resolution by adaptively changing a vertical resolution and a horizontal resolution. Accordingly, an embodiment of the present disclosure may estimate depth information at a high speed while reducing loss of a definition.

In addition, the electronic device according to an embodiment of the present disclosure may adaptively adjust complexity of a depth information obtaining process and a load applied to the electronic device 100 by considering performance of the processor, a use state of the processor, and a type or characteristics of an application being executed.

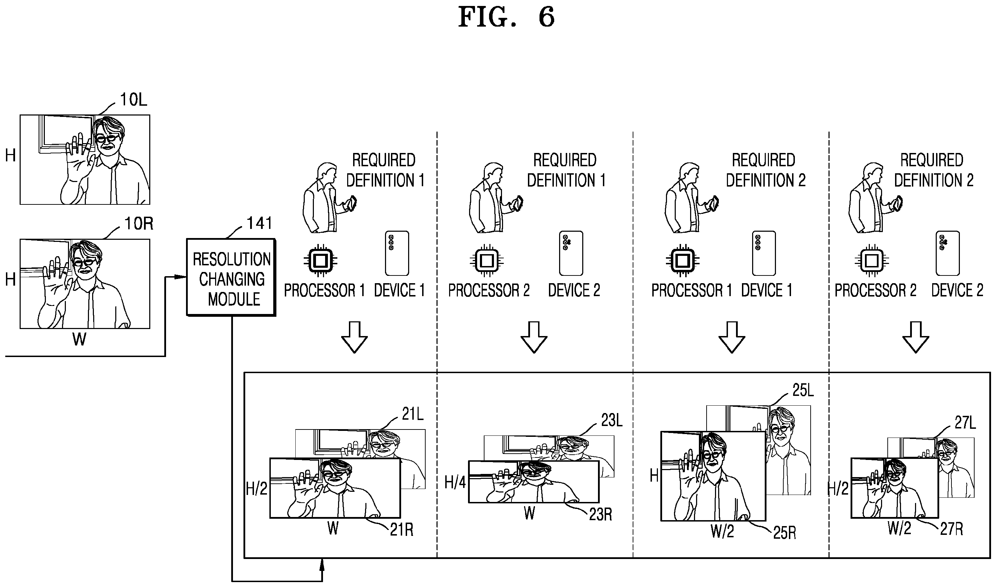

FIG. 6 is a diagram illustrating changing a resolution in an electronic device according to an embodiment of the present disclosure.

The electronic device 100 according to the present disclosure may include the resolution changing module 141. The resolution changing module 141 may include a unit that processes a function of changing a resolution or an operation of changing a resolution, performed by the processor 130, and may be implemented as software, such as instructions, an algorithm, a data structure, or a program code, and executed by the processor 130.

The resolution changing module 141 may adjust resolutions of stereo images 10L and 10R. The resolution changing module 141 may receive a left-eye image 10L, receive a right-eye image 10R, and adjust resolutions of the left-eye image 10L and the right-eye image 10R.

The resolution changing module 141 may adjust the resolutions of the left-eye image 10L and the right-eye image 10R based on at least one of a required definition for depth information, processor information, or device information. The resolution changing module 141 may transfer the stereo images of which the resolutions have been adjusted to the depth information obtaining module or a device including the depth information obtaining module.

The resolutions may include at least one of a horizontal resolution or a vertical resolution. In the present disclosure, horizontal may refer to a case that is parallel or identical to a base line between the first camera and the second camera, and vertical may refer to a case that is perpendicular to a straight line connecting the first camera and the second camera.

Hereinafter, for convenience of description, a case where a required definition and computational performance differ two times is described as an example. However, this is only an example. An embodiment of the present disclosure is not limited to the above-mentioned example.

Referring to FIG. 6, when an error range of a depth value corresponding to a required definition 1 is 1/2 times smaller than an error range of a depth value corresponding to a required definition 2, a bitrate corresponding to the required definition 1 is twice greater than a bitrate corresponding to the required definition 2, computational performance of a processor 1 is twice more excellent than computational performance of a processor 2, and computational performance of a device 1 is twice more excellent than computational performance of a device 2, the resolution changing module 141 may adaptively adjust the resolutions of the left-eye image 10L and the right-eye image 10R in each case.

In the case of the required definition1, the processor 1, and the device 1, the resolution changing module 141 may obtain stereo images A (21L and 21R) adjusted to a vertical resolution $\frac{H}{2}$ and a horizontal resolution W.

In the case of the required definition 1, the processor 2, and the device 2, the resolution changing module 141 may obtain stereo images B (23L and 23R) adjusted to a vertical resolution $\frac{H}{4}$ and a horizontal resolution W.

In the case of the required definition 2, the processor 1, and the device 1, the resolution changing module 141 may obtain stereo images C (25L and 25R) adjusted to a vertical resolution H and a horizontal resolution $\frac{W}{2}$.

In the case of the required definition 2, the processor 2, and the device 2, the resolution changing module 141 may obtain stereo images D (27L and 27R) adjusted to a vertical resolution $\frac{H}{2}$ and a horizontal resolution $\frac{W}{2}$.

In a case of obtaining depth information from the stereo images B (23L and 23R), a time taken to obtain the depth information may be shorter or a load of the device for obtaining the depth information may be lower than in a case of obtaining depth information from the stereo images A (21L and 21R) or the stereo images C (25L and 25R).

In a case of obtaining depth information from the stereo images C (25L and 25R) or the stereo images D (27L and 27R) having a relatively lower horizontal definition than the stereo images A (21L and 21R), a definition of the depth information obtained from the stereo images C (25L and 25R) or the stereo images D (27L and 27R) may be lower than a definition of depth information obtained from the stereo images A (21L and 21R).

The electronic device according to an embodiment of the present disclosure may reduce deterioration of a horizontal resolution by adaptively changing a vertical resolution and a horizontal resolution. Accordingly, an embodiment of the present disclosure may estimate depth information at a high speed while reducing loss of a definition.

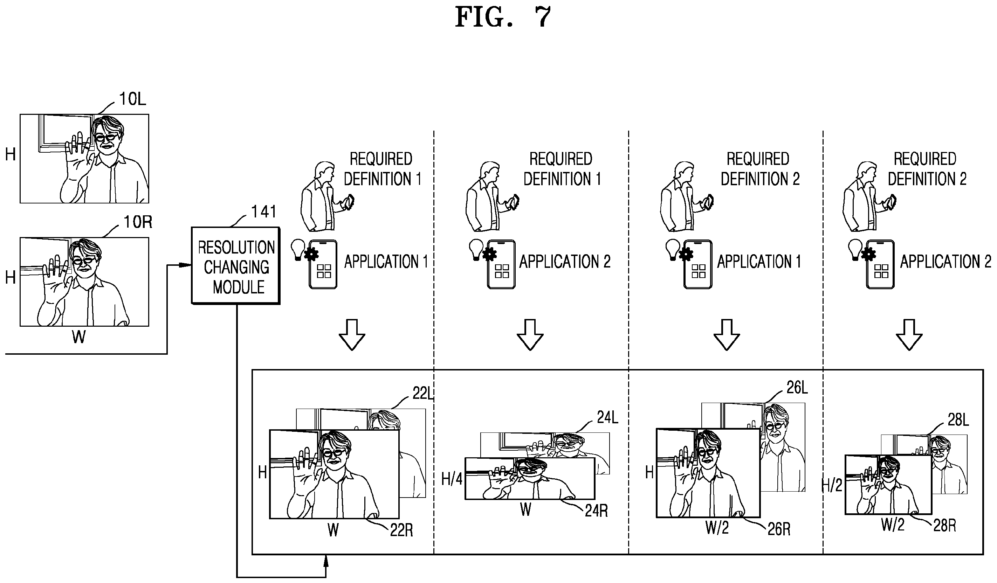

FIG. 7 is a diagram illustrating changing a resolution in an electronic device according to an embodiment of the present disclosure.

The electronic device 100 according to the present disclosure may include the resolution changing module 141. The resolution changing module 141 may include a unit that processes a function of changing a resolution or an operation of changing a resolution, performed by the processor 130, and may be implemented as software, such as instructions, an algorithm, a data structure, or a program code, and executed by the processor 130.

The resolution changing module 141 may adjust resolutions of stereo images 10L and 10R. The resolution changing module 141 may receive a left-eye image 10L, receive a right-eye image 10R, and adjust resolutions of the left-eye image 10L and the right-eye image 10R.

The resolution changing module 141 may adjust the resolutions of the left-eye image 10L and the right-eye image 10R based on at least one of a required definition for depth information or characteristics of an application being executed. The resolution changing module 141 may transfer the stereo images of which the resolutions have been adjusted to the depth information obtaining module or a device including the depth information obtaining module.

The resolutions may include at least one of a horizontal resolution or a vertical resolution. In the present disclosure, horizontal may refer to a case that is parallel or identical to a base line between the first camera and the second camera, and vertical may refer to a case that is perpendicular to a straight line connecting the first camera and the second camera.

Referring to FIG. 7, when an error range of a depth value corresponding to a required definition 1 is 1/2 times smaller than an error range of a depth value corresponding to a required definition 2, when a bitrate corresponding to the required definition 1 is twice greater than a bitrate corresponding to the required definition 2, when a time taken to obtain depth information in an application 2 needs to be shorter than that in an application 1, or when a load for an operation of obtaining depth information in the application 2 needs to be lower than that in the application 1, the resolution changing module 141 may adaptively adjust the resolutions of the left-eye image 10L and the right-eye image 10R in each case.

Referring to FIG. 7, when the application 2 has higher relative importance of a real-time operation or fast processing than the application 1, when a depth information obtaining time of the application 2 is shorter than that of the application 1, when a driving speed required by the application 2 is higher than that required by the application 1, or when the application 2 requires object tracking, the electronic device may adaptively change a vertical resolution and a horizontal resolution.

In the case of (required definition 1, application 1), the resolution changing module 141 may obtain stereo images E (22L and 22R) adjusted to a vertical resolution H and a horizontal resolution W.

In the case of (required definition 1, application 2), the resolution changing module 141 may obtain stereo images F (24L and 24R) adjusted to a vertical resolution $\frac{H}{4}$ and a horizontal resolution W.

In the case of (required definition 2, application 1), the resolution changing module 141 may obtain stereo images G (26L and 26R) adjusted to a vertical resolution H and a horizontal resolution $\frac{W}{2}$.

In the case of (required definition 2, application 2), the resolution changing module 141 may obtain stereo images H (28L and 28R) adjusted to a vertical resolution $\frac{H}{2}$ and a horizontal resolution $\frac{W}{2}$.

In a case of obtaining depth information from the stereo images F (24L, 24R), a time taken to obtain the depth information may be shorter or a load of a device for obtaining the depth information may be lower than in a case of obtaining depth information from the stereo images E (22L, 22R) or the stereo images G (24L, 24R).

In a case of obtaining depth information from the stereo images E (22L, 22R), from the stereo images G (26L, 26R) having a relatively lower horizontal resolution or from the stereo images H (28L, 28R), a definition of the depth information obtained from the stereo images G (26L, 26R) or the stereo images H (28L, 28R) may be lower than a definition of the depth information obtained from the stereo images E (22L, 22R) or the stereo images F (24L, 24R).

The electronic device according to an embodiment of the present disclosure may reduce deterioration of a horizontal resolution by adaptively changing a vertical resolution and a horizontal resolution. Accordingly, an embodiment of the present disclosure may estimate depth information at a high speed while reducing loss of a definition.

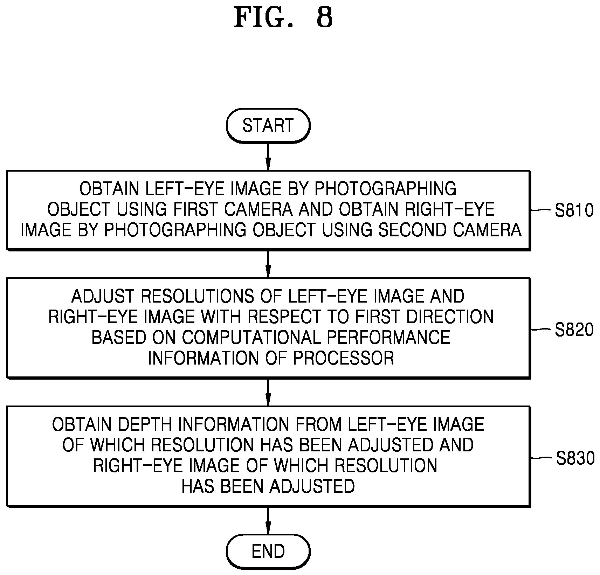

FIG. 8 is a flowchart illustrating a method of processing an image, according to an embodiment of the present disclosure.

In operation S810, the electronic device 100 may obtain a left-eye image by photographing an object through the first camera and obtain a right-eye image by photographing the object through the second camera.

The electronic device 100 may obtain stereo images. The stereo images may include images photographed by one or more cameras at different times.

The first camera and the second camera may be stereo cameras. The first camera and the second camera may refer to binocular cameras, for example, a left-eye camera and a right-eye camera. However, this is only an example, and the first camera 111 and the second camera 113 may refer to cameras positioned or arranged on the electronic device 100 in various directions, such as up and down, left and right, and diagonally.

Although the electronic device 100 is described as including two cameras including the first camera and the second camera, the present disclosure is not limited thereto. In an embodiment of the present disclosure, the electronic device 100 may include no camera, include a single camera, or include multi cameras of three or more. For example, the first camera and the second camera may represent different photographing times of the same camera.

Although the electronic device 100 has been described as obtaining a left-eye image and a right-eye image by using the first camera and the second camera, the present disclosure is not limited thereto.

The electronic device 100 may receive stereo images 10L and 10R photographed by other cameras, instead of the cameras of the electronic device 100, from another electronic device. However, this is only an example and the electronic device 100 may obtain stereo images through another method.

In an embodiment of the present disclosure, the left-eye image and the right-eye image may have been obtained in advance and stored in the image storage. The electronic device 100 may obtain the left-eye image and the right-eye image from the image storage.

In operation S820, the electronic device 100 may adjust resolutions of the left-eye image and the right-eye image based on computational performance information of the processor of the electronic device. The resolutions with respect to the first direction may include a vertical resolution.

The processor may include at least one of a CPU, a GPU, a TPU, a NPU, an AP, a DSP, a VPU, a MPU, a SoC, an IC, or an AI Accelerator. However, these are only examples and the processor is not limited to the above-mentioned examples.

In the present disclosure, for convenience of description, computational performance information of any processor such as FLOPS may be described as an example. However, this is only an example and the present disclosure may also be applied in the same manner to other processor information.

The computational performance information of the processor may be identified based on at least one of computational performance, the number of cores, cache capacity, MIPS, FLOPS, IPC, CPI, a thread count, an instruction set, clock speed, a benchmark score or benchmark result, power consumption while the processor operates, energy efficiency, Performance Per Watt, TDP, active efficiency, idle efficiency, a processor architecture, a memory bandwidth, processor generation, a memory type and capacity, computational precision, a unit of a processor manufacturing process, a manufacturer, a model, a purpose, or a cache hit rate. However, these are only examples and the computational performance information of the processor is not limited thereto.

The electronic device 100 may obtain processor information through a user input and obtain processor information preset or stored in the electronic device 100. The electronic device 100 may determine to adjust a resolution H with respect to the first direction to Hₛ based on the obtained processor information.

For example, when the resolution changing module 141 receives computational performance (1600 FLOPS) of the processor as an input, the resolution changing module 141 may identify at least one of a vertical size Hₛ or a vertical size adjustment ratio k(k≤1) that does not exceed the computational performance. The electronic device 100 may obtain a left-eye image and a right-eye image of which resolutions have been adjusted to the identified vertical size Hₛ=H*k. In an embodiment of the present disclosure, resolutions of the left-eye image 10L and the right-eye image 10R with respect to a second direction may be maintained.

The electronic device 100 may identify a power state of the electronic device 100. The electronic device 100 may adjust the resolutions of the left-eye image and the right-eye image based on the power state.

For example, when the power state of the electronic device 100 is below a threshold value, when the electronic device 100 is not being charged, or when power of the electronic device 100 needs to be saved, the resolution changing module 141 may obtain a left-eye image 20L and a right-eye image 20R of which resolutions have been adjusted to a vertical size Hₛ = H*k(k≤1).

The electronic device 100 may adjust the resolutions of the left-eye image and the right-eye image with respect to the second direction based on a required definition for depth information. The resolutions with respect to the second direction may include a horizontal resolution. For example, the electronic device 100 may change the resolutions of the left-eye image and the right-eye image with respect to the second direction from W to Wₛ.

A required definition for depth information may refer to a required degree to identify different depth values. A required definition may be represented by a bitrate, an error range for a preset depth value, or an identification unit of a depth value.

The electronic device 100 may obtain a left-eye image and a right-eye image of which resolutions have been adjusted by changing horizontal sizes W of stereo images to Wₛ=W*r (r≤1) according to a horizontal size adjustment ratio r.

The electronic device 100 may identify an application being executed by the electronic device 100. The electronic device 100 may adjust the resolutions of the left-eye image and the right-eye image according to characteristics of the application being executed.

The characteristics of the application may indicate whether the application is an AR application, whether the application is a robot application, whether the application is an autonomous driving application, whether the application is a medical image-related application, importance of a real-time or fast processing operation, urgency, a computation speed required by the application, a definition required by the application, or whether object tracking is required.

The electronic device 100 may identify information about a depth information obtaining time corresponding to the characteristics of the application being executed. The electronic device 100 may adjust the resolutions of the left-eye image and the right-eye image based on a corresponding depth information obtaining time.

The information about the depth information obtaining time may include at least one of a required depth information obtaining time, a driving speed required by the application, or whether the depth information obtaining time needs to be reduced.

To obtain the required depth information obtaining time or shorter, the resolution changing module 141 may obtain stereo images 20L and 20R of which resolutions have been adjusted by changing vertical sizes H of the stereo images to Hₛ=H*k (k≤1).

The resolution changing module 141 may identify a driving speed required by the identified application. The driving speed may be associated with a depth map obtaining time, and the shorter the depth map obtaining time, the higher the driving speed. The resolution changing module 141 may adjust the resolutions of the left-eye image 10L and the right-eye image 10R based on the identified driving speed.

When a driving speed required by the application being executed is equal to or higher than a preset threshold value, when a depth information obtaining time required by the application being executed needs to be reduced, or when a driving speed required by the application currently being executed needs to be higher than a driving speed required by an application previously executed, the electronic device 100 may obtain stereo images 20L and 20R of which resolutions have been adjusted by changing the vertical sizes H of the stereo images to Hₛ=H*k(k≤1). In an embodiment of the present disclosure, the resolutions of the left-eye image 10L and the right-eye image 10R with respect to the second direction may be maintained.

When a time taken for the application being executed to obtain depth information needs to be reduced, the electronic device 100 may obtain stereo images 20L and 20R of which resolutions have been adjusted by changing vertical sizes H of the stereo images 10L and 10R to Hₛ=H*k (k≤1). In an embodiment of the present disclosure, the resolutions of the left-eye image 10L and the right-eye image 10R with respect to the second direction may be maintained.

The electronic device 100 may identify a use state of the processor 130. The resolution changing module 141 may adjust the resolutions of the left-eye image and the right-eye image based on computational performance information of the processor 130 and information regarding the use state of the processor 130.

The electronic device 100 may obtain stereo images 20L and 20R of which resolutions have been adjusted in consideration of the computation performance information of the processor 130 and the use state of the processor, such as an application use situation of the electronic device 100.

For example, when computational performance of the processor available for obtaining depth information is below a threshold level due to background execution or concurrent execution of another application, or when computational performance allocable to obtaining depth information is below a threshold level, the resolution changing module 141 may obtain stereo images 20L and 20R of which vertical resolutions have been adjusted.

In operation S830, the electronic device 100 may obtain depth information from the left-eye image of which the resolution has been adjusted and the right-eye image of which the resolution has been adjusted.

The depth information may include a depth map, a disparity map, etc. However, these are only examples and the depth information is not limited to the above-mentioned examples.

The electronic device 100 may estimate the depth information by using entire information of an image through global matching. The electronic device 100 may estimate the depth information by using a method, such as, for example, Belief propagation, Dynamic programming, Semi-global matching, and Graph-cut.

The electronic device 100 may estimate the depth information by using partial information of an image through local matching. The electronic device 100 may estimate the depth information through at least one of feature-based local matching or region-based local matching. The electronic device 100 may estimate the depth information by using a method, such as, for example, SAD, SSD, NCC, and Census transform.

The electronic device 100 may obtain the depth information by using an AI model trained to receive stereo images as inputs and output depth information. The AI model may further include at least one of Iterative Geometry Encoding Volume-Stereo (IGEV-Stereo), Cascaded Recurrent Network with Adaptive Correlation (CREStereo), Attention Concatenation Volume (ACVNet), or Geometry and Context Network (CG-Net).

The electronic device 100 may obtain depth information with an improved resolution from the obtained depth information.

The electronic device 100 may use a super resolution model to obtain the depth information with the improved resolution.

The electronic device 100 may estimate values between pixels by using the super resolution model that uses an interpolation method such as Bicubic Interpolation, thereby obtaining the depth information with the improved resolution from the depth information.

The super resolution model may include an AI model trained to receive depth information as an input and output depth information with an improved resolution. The AI model may include at least one of SRCNN, ESPCN, VDSR, SRGAN, FSRCNN, or LapSRN.

For example, the electronic device 100 may obtain the depth information with the improved resolution by changing a vertical size H of the depth information to Ht=H*a (1≤a) and changing a horizontal size W of the depth information to Wt=W*b (1≤b).

FIG. 9 is a block diagram illustrating components of an electronic device according to an embodiment of the present disclosure.

The electronic device 100 may be implemented as various electronic devices, such as a laptop computer, a desktop, an e-book reader, a digital broadcasting terminal, a PDA, a PMP, a navigation, an MP3 player, a camcorder, an IPTV, a DTV, a TV, a set-top box, a smart monitor, a tablet PC, a laptop, a digital signage, a large display, a 360-degree projector, a MS, a vehicle, a satellite, an airborne, a cellular phone, a smart phone, a wearable device, etc.

The electronic device 100 may be an augmented reality device. The 'augmented reality device' may be a device capable of expressing augmented reality, and may be implemented as, for example, Augmented Reality Glasses in the shape of glasses that a user wears on his/her face. However, the augmented reality device is not limited thereto and may be implemented as a Head-Mounted Display (HMD) apparatus worn on a user's head, an Augmented Reality Helmet, etc.

Referring to FIG. 9, the electronic device 100 may include the camera 110, the processor 130, memory 140, and a display 150. The camera 110, the processor 130, the memory 140, and the display 150 may be electrically and/or physically connected to each other.

Components included in the electronic device 100 are not limited to those shown in FIG. 9. In an embodiment of the present disclosure, the electronic device 100 may not include at least one of the camera 110 or the display 150. In an embodiment of the present disclosure, the electronic device 100 may further include a gaze tracking sensor or a communication device.

The camera 110 may photograph an object in a real space to obtain an image about the object. In an embodiment of the present disclosure, the camera 110 may include a lens module, an image sensor, and an image processing module. The camera 110 may obtain a still image or a moving image obtained by the image sensor (for example, CMOS or CCD). The image processing module may extract necessary information by processing the still image or moving image obtained through the image sensor and transfer the extracted information to the processor 130.

In an embodiment of the present disclosure, the camera 110 may include the first camera 111 and the second camera 113). The first camera 111 and the second camera 113 may be stereo cameras. The first camera 111 and the second camera 113 may refer to binocular cameras, for example, a left-eye camera and a right-eye camera. However, this is only an example, and the first camera 111 and the second camera 113 may refer to cameras positioned or arranged in the electronic device 100 in various directions, such as up and down, left and right, and diagonally.

Although FIG. 9 shows the electronic device 100 having two cameras including the first camera 111 and the second camera 113, the present disclosure is not limited thereto.

In an embodiment of the present disclosure, the electronic device 100 may include no camera, include a single camera, or include multi cameras of three or more.

In an embodiment of the present disclosure, the electronic device according to the present disclosure may obtain a stereo image by changing a viewing angle of any camera such as moving or rotating the camera. For example, the first camera 111 and the second camera 113 may represent different photographing times of the same camera.

The electronic device 100 may obtain stereo images by photographing an object using the first camera 111 and the second camera 113. The stereo images may include binocular images, for example, a left-eye image of the object photographed by the first camera 111 and a right-eye image of the object photographed by the second camera 113.

The processor 130 may execute one or more instructions of a program stored in the memory 140. The processor 130 may be configured as a hardware component that performs arithmetic, logic and input/output operations, and signal processing.

The processor 130 may include at least one of a CPU, a GPU, a TPU, a NPU, an AP, a DSP, a VPU, a MPU, a SoC, an IC, Digital Signal Processing Devices (SPDs), Programmable Logic Devices (PLDs), Field Programmable Gate Arrays (FPGAs), or an AI Accelerator. However, these are only examples and the present disclosure is not limited to the above-mentioned examples.

In an embodiment of the present disclosure, the processor 130 may include an AI processor or an AI accelerator that performs AI learning. The AI processor may be manufactured in the form of a dedicated hardware chip for AI or as a part of an existing general-purpose processor (e.g., CPU or application processor) or a graphics-dedicated processor (e.g., GPU) and mounted on the electronic device 100.

In FIG. 9, the processor 130 is shown as a single element, but the processor 130 is not limited thereto. In an embodiment of the present disclosure, the processor 130 may be configured with one or more elements.

The processor 130 may include various processing circuitry by including at least one processor. In the at least one processor, one or more processors may be configured to perform various functions described in the present disclosure individually and/or collectively in a distributed form. For example, the processor 130 may be configured to perform various functions described in FIGS. 1 to 9.

The "processor", the "at least one processor", and the "one or more processors" may be configured to perform various functions. However, the terms may cover a situation in which a processor performs some of functions and another processor(s) performs other ones of the functions, and a situation in which a single processor performs all functions, without any limitation. Also, the at least one processor may include a combination of processors that perform various functions of the disclosed functions in a distributed manner. The at least one processor may execute program instructions for achieving or performing various functions.

For example, a first processor may perform A and B and a second processor may perform C. Alternatively, the first processor may perform a part of A and the second processor may perform the remaining part of A, B, and C.

The memory 140 may include at lest one storage medium among, for example, a flash memory type, a hard disk type, a multimedia card micro type, card type memory (for example, Secure Digital (SD) memory or eXtreme Digital (XD) memory), Random Access Memory (RAM), Static Random Access Memory (SRAM), Read-Only Memory (ROM), Electrically Erasable Programmable Read-Only Memory (EEPROM), Programmable Read-Only Memory (PROM), High Bandwidth Memory (HBM), or an optical disk. However, these are only examples and the memory 140 is not limited thereto.

The memory 140 may store instructions related to functions or operations of the electronic device 100 to obtain depth value information of an object. In an embodiment of the present disclosure, the memory 140 may store at least one among instructions capable of being interpreted by the processor 130, an algorithm, a data structure, a program code, or an application program. The instructions, algorithm, data structure, program code, and application program stored in the memory 140 may be implemented in a programming or scripting language, such as, for example, C, C++, Java, assembler, Python, etc.

The memory 140 may store instructions, an algorithm, a data structure, or a program code related to the resolution changing module 141, the depth information obtaining module 143, and the resolution improving module 145. A 'module' included in the memory 140 may mean a unit for processing a function or operation that is performed by the processor 130 and may be embodied as software, such as instructions, an algorithm, a data structure, or a program code.

In an embodiment of the present disclosure, the processor 130 may execute instructions or program codes stored in the memory 140 to enable the electronic device 100 to perform a preset function.

The resolution changing module 141 may be configured with instructions or a program code to execute a function and/or operation of adjusting resolutions of a left-eye image and a right-eye image. The processor 130 may execute the instructions or program code configuring the resolution changing module 141 to adjust the resolutions of the left-eye image and the right-eye image.

The depth information obtaining module 143 may be configured with instructions or a program code to execute a function and/or operation of obtaining depth information from a left-eye image or a right-eye image. The processor 130 may execute the instructions or program code of the depth information obtaining module 143 to obtain the depth information from the left-eye image and the right-eye image.

The resolution improving module 145 may be configured with instructions or a program code to execute a function and/or operation of improving a resolution of depth information or a spatial image (for example, 3D image). The processor 130 may execute the instructions or program code of the resolution improving module 145 to improve the resolution of the depth information or the spatial image (for example, 3D image).

The image storage 147 may store at least one of an image obtained from the camera, an image received from another device, an image of which a resolution has been adjusted through the resolution changing module 143, depth information obtained by the depth information obtaining module 143, depth information of which a resolution has been improved, or a spatial image of which a resolution has been improved.

The display 150 may output information processed by the electronic device 100. For example, the display 150 may display a user interface for photographing surroundings of the electronic device 100 and information related to a service that is provided based on a photographed image of the surroundings of the electronic device 100.

According to an embodiment, the display 150 of the electronic device 100 may provide an AR image. The display 150 according to an embodiment may include a wave guide (not shown) and a display module (not shown). The wave guide (not shown) may be made of a transparent material to show a part of a rear side when a user wears the electronic device 100. The wave guide (not shown) may be composed of a single-layer or multi-layer flat plate made of a transparent material through which light propagates while being reflected internally. The wave guide (not shown) may face an exit surface of the display module to receive light of a projected virtual image. Here, the transparent material may mean a material through which light is transmitted, and may not have transparency of 100 % and may have a preset color. In an embodiment, because the wave guide (not shown) is formed of a transparent material, a user may view not only a virtual object of a virtual image through the display 150, but also an external real scene, and thus, the wave guide (not shown) may be referred to as a see-through display. The display 150 may provide an augmented reality image by outputting a virtual object of a virtual image through the wave guide.

The electronic device 100 may further include a user input device (not shown). The user input device (not shown) may refer to means through which a user inputs data for controlling the electronic device 100.

For example, the user input device (not shown) may include, but is not limited to, at least one of a key pad, a dome switch, a touch pad (a contact capacitance type, a pressure resistive film type, an infrared sensing type, a surface ultrasonic conduction type, an integral tension measurement type, a piezo effect type, etc.), a jog wheel, or a jog switch.

The user input device (not shown) may photograph surroundings of the electronic device 100 by using the camera module 110 and receive a user input for receiving a service from the electronic device 100 or a server (not shown) based on a photographed image. For example, the processor 130 may execute a gesture recognition module (not shown) stored in the memory 140 to recognize a user's gesture.

The electronic device 100 may further include a microphone (not shown). The microphone (not shown) may receive an external sound signal and process the external sound signal to electrical sound data. For example, the microphone (not shown) may receive a sound signal from an external device or a speaker. The microphone (not shown) may use various noise removal algorithms to remove noise generated while receiving an external sound signal. The microphone (not shown) may receive a user's voice input for controlling the electronic device 100.

According to an embodiment of the present disclosure, at least one processor 130 may be configured to execute a program or at least one instruction stored in memory 140 to cause an electronic device 100 to obtain a left-eye image by photographing an object using a first camera 111 among the plurality of cameras, and obtain a right-eye image by photographing the object using a second camera 113.

The at least one processor 130 may be configured to execute the program or the at least one instruction stored in the memory 140 to cause the electronic device 100 to adjust resolutions of the left-eye image and the right-eye image with respect to a first direction based on computational performance information of the processor of the electronic device.

The at least one processor 130 may be configured to execute the program or the at least one instruction stored in the memory 140 to cause the electronic device 100 to obtain depth information from the left-eye image of which the resolution has been adjusted and the right-eye image of which the resolution has been adjusted.

The at least one processor 130 may be configured to execute the program or the at least one instruction stored in the memory 140 to cause the electronic device 100 to adjust resolutions of the left-eye image and the right-eye image with respect to a second direction based on a required resolution representing ability to identify different depth values.

The at least one processor 130 may be configured to execute the program or the at least one instruction stored in the memory 140 to cause the electronic device 100 to identify an application being executed by the electronic device 100 and adjust the resolutions of the left-eye image and the right-eye image based on characteristics of the identified application.

The at least one processor 130 may be configured to execute the program or the at least one instruction stored in the memory 140 to cause the electronic device 100 to identify information about a depth information obtaining time corresponding to the characteristics of the identified application, and adjust the resolutions of the left-eye image and the right-eye image based on the identified information about the depth information obtaining time.

The at least one processor 130 may be configured to execute the program or the at least one instruction stored in the memory 140 to cause the electronic device 100 to identify a use state of the processor and adjust the resolutions of the left-eye image and the right-eye image with respect to the first direction based on information about the use state of the processor 130.

The at least one processor 130 may be configured to execute the program or the at least one instruction stored in the memory 140 to cause the electronic device 100 to identify a power state of the electronic device 100 and adjust the resolutions of the left-eye image and the right-eye image based on the power state.

The at least one processor 130 may be configured to execute the program or the at least one instruction stored in the memory 140 to cause the electronic device 100 to improve a resolution of the depth information.

According to an embodiment of the present disclosure, a method of processing an image in the electronic device 100 may be provided.

The method may include obtaining a left-eye image by photographing an object using a first camera and obtaining a right-eye image by photographing the object using a second camera.

The method may include adjusting resolutions of the left-eye image and the right-eye image with respect to a first direction based on computational performance information of a processor of the electronic device.

The method may include obtaining depth information from the left-eye image of which the resolution has been adjusted and the right-eye image of which the resolution has been adjusted.

The method may include adjusting resolutions of the left-eye image and the right-eye image with respect to a second direction based on a required definition representing ability to identify different depth values.

The method may include identifying an application being executed by the electronic device 100 and adjusting the resolutions of the left-eye image and the right-eye image based on characteristics of the identified application.

The method may include identifying information about a depth information obtaining time corresponding to the characteristics of the identified application and adjusting the resolutions of the left-eye image and the right-eye image based on the identified information about the depth information obtaining time.

The method may include identifying a use state of the processor and adjusting the resolutions of the left-eye image and the right-eye image with respect to the first direction based on information about the use state of the processor.

The method may include identifying a power state of the electronic device 100 and adjusting the resolutions of the left-eye image and the right-eye image based on the power state.

The method may include improving a resolution of the depth information.

According to an embodiment of the present disclosure, a computer-readable recording medium storing a program for executing the method on a computer may be provided.

The aforementioned descriptions of the present disclosure are only for illustrative purposes, and it will be apparent that those of ordinary skill in the technical art to which the present disclosure belongs can easily make various modifications thereto without changing the technical spirit and essential features of the present disclosure. Thus, it should be understood that the embodiments described above are merely for illustrative purposes and not for limitation purposes in all aspects For example, each component described as a single type can be implemented in a distributed type, and components described as distributed can be implemented in a combined form.

The scope of the present disclosure may be indicated by the claims set forth below rather than by the detailed description above. Various features mentioned in one claim category (for example, in a method claim) of the present disclosure may also be claimed in another claim category (for example, in a system claim). Additionally, an embodiment of the present disclosure may also include not only combinations of features specified in the appended claims, but also various combinations of individual features within the claims. The scope of the present disclosure should be interpreted to include the spirit and scope of the claims and all such modifications or modified forms as would be derived from the equivalent concept.

## Claims

1. A method of processing an image in an electronic device 100, the method comprising:
obtaining a left-eye image by photographing an object by using a first camera 111 and obtaining a right-eye image by photographing the object by using a second camera 113 (S810);
adjusting a resolution of the left-eye image and a resolution of the right-eye image with respect to a first direction based on computational performance information of a processor 130 of the electronic device 100 (S820); and
obtaining depth information from the left-eye image of which the resolution has been adjusted and the right-eye image of which the resolution has been adjusted (S830).

2. The method of claim 1, further comprising
adjusting a resolution of the left-eye image and a resolution of the right-eye image with respect to a second direction based on a required resolution representing an ability to identify different depth values.

3. The method of any one of claim 1 or 2, further comprising
identifying an application being executed by the electronic device 100;
identifying information about a depth information obtaining time corresponding to characteristics of the identified application; and
adjusting the resolution of the left-eye image and the resolution of the right-eye image based on the identified information about the depth information obtaining time.

4. The method of claim 3, wherein
the characteristics of the application include information about at least one of a type of the application, a computation speed required by the application, importance of a fast processing operation, urgency, or whether object tracking is required.

5. The method of any one of claims 1 to 4, wherein
the adjusting of the resolution of the left-eye image and the resolution of the right-eye image with respect to the first direction (S820) comprises:
identifying a use state of the processor 130; and
adjusting the resolution of the left-eye image and the resolution of the right-eye image with respect to the first direction based on the computational performance information of the processor 130 and
information about the use state of the processor 130.

6. The method of any one of claims 1 to 5, further comprising:
identifying a power state of the electronic device 100; and
adjusting the resolution of the left-eye image and the resolution of the right-eye image based on the power state,
wherein the power state represents at least one of a power consumption amount of the electronic device 100, a consumption power amount of the electronic device 100, a remaining battery level of the electronic device 100, whether the electronic device 100 is being charged, or whether power consumption needs to be reduced.

7. The method of any one of claims 1 to 6, further comprising
improving a resolution of the depth information.

8. The method of any one of claims 1 to 7, wherein
computational performance of the processor is identified based on at least one of a computational performance index, the number of cores, cache capacity, a clock speed, a power consumption amount, a processor architecture, a bandwidth, or processor generation.

9. An electronic device 100 for processing an image, the electronic device 100 comprising:
a plurality of cameras 110;
memory 140 storing a program or at least one instruction; and
at least one processor 130,
wherein the at least one processor 130 is configured to execute the program or the at least one instruction stored in the memory 140 to cause the electronic device 100 to
obtain a left-eye image by photographing an object by using a first camera 111 among the plurality of cameras,
obtain a right-eye image by photographing the object by using a second camera 113 among the plurality of cameras,
adjust a resolution of the left-eye image and a resolution of the right-eye image with respect to a first direction based on computational performance information of the at least one processor 130 of the electronic device 100, and
obtain depth information from the left-eye image of which the resolution has been adjusted and the right-eye image of which the resolution has been adjusted.

10. The electronic device 100 of claim 9, wherein the at least one processor 130 is configured to execute the program or the at least one instruction stored in the memory 140 to cause the electronic device 100 to adjust a resolution of the left-eye image and a resolution of the right-eye image with respect to a second direction based on a required resolution representing an ability to identify different depth values.

11. The electronic device 100 of any one of claim 9 or 10, wherein the at least
one processor 130 is configured to execute the program or the at least one instruction stored in the memory 140 to cause the electronic device 100 to
identify an application being executed by the electronic device 100, identify information about a depth information obtaining time corresponding to characteristics of the identified application, and
adjust the resolution of the left-eye image and the resolution of the right-eye image based on the identified information about the depth information obtaining time.

12. The electronic device 100 of claim 11, wherein
the characteristics of the application include information about at least one of a type of the application, a computation speed required by the application, importance of a fast processing operation, urgency, or whether object tracking is required.

13. The electronic device 100 of any one of claims 9 to 12,
wherein the at least one processor 130 is configured to execute the program or the at least one instruction stored in the memory 140 to cause the electronic device 100 to
identify a use state of the processor 130, and
adjust the resolution of the left-eye image and the resolution of the right-eye image with respect to the first direction based on the computational performance information of the processor 130 and information about the use state of the processor 130.

14. The electronic device 100 of any one of claim 9 or 13, wherein the at least
one processor 130 is configured to execute the program or the at least one instruction stored in the memory 140 to cause the electronic device 100 to
identify a power state of the electronic device 100, and
adjust the resolution of the left-eye image and the resolution of the right-eye image based on the power state, and
the power state represents at least one of a power consumption amount of the electronic device 100, a consumption power amount of the electronic device 100, a remaining battery level of the electronic device 100, whether the electronic device 100 is being charged, or whether power consumption needs to be reduced.

15. A computer-readable recording medium storing a program for executing, on a computer, the method of any one of claims 1 to 8.
